# EUROPEAN PATENT SPECIFICATION

(11) **EP 0 331 364 B1**
(45) Date of publication and mention of the grant of the patent: **24.01.1996**
(21) Application number: 89301825.9
(22) Date of filing: 24.02.1989
(51) Int. Cl.: C08F 297/06

(54) **Block copolymer of propylene and a process for the production thereof**
Blockcopolymere aus Propylen und Verfahren zu ihrer Herstellung
Polymères bloc de propylène et leur procédé de préparation

(30) Priority: 01.03.1988 JP 45782/88; 03.10.1988 JP 247307/88; 16.02.1989 JP 34995/89
(43) Date of publication of application: 06.09.1989
(73) Proprietor: MITSUI TOATSU CHEMICALS, Inc., Chiyoda-Ku Tokyo 100 (JP)
(72) Inventor: Asanuma, Tadashi, Takaishi-shi Osaka-fu (JP); Ito, Mitsuru, Takaishi-shi Osaka-fu (JP); Kawanishi, Kaoru, Takaishi-shi Osaka-fu (JP)
(74) Representative: Harvey, David Gareth

(56) References cited:
- EP-A- 0 240 638
- US-A- 3 223 686

## Description

This invention relates to a block copolymer of propylene and a process for the production thereof. More specifically, it relates to a block copolymer obtained by copolymerization in the presence of an alkenylsilane. It also relates to a block copolymer obtained by treating the copolymer under conditions where a specific reaction occurs and a process for the production thereof.

Polypropylene is a general-purpose resin having comparatively excellent rigidity, but is poor in impact resistance (especially at low temperatures).

As a means for solving this problem, a block copolymer produced by firstly polymerizing propylene substantially alone and thereafter copolymerizing propylene and ethylene has been developed. This has yielded a resin having an excellent balance of properties between impact resistance and rigidity.

In order to obtain a block polymer of polypropylene having an excellent balance between impact resistance and rigidity, various proposals have been made, for example, to change the molecular weight and stereo-regularity of the homopolymerized part, and especially the molecular weight and reaction ratio of ethylene to propylene of the copolymerized part, etc. However, they are as yet not fully satisfactory, and the development of a block copolymer superior in the balance in the physical properties is still wanted.

Copolymerization of an alkenylsilane and an olefin is disclosed in US-A-3,223,686 which described a random copolymer obtained by polymerizing an alkenylsilane and ethylene in the presence of a transition metal compound and an organometal compound.

A process which utilizes an alkenylsilane for producing a crosslinked elastomeric terpolymer, having physical & mechanical characteristics resembling vulcanized rubber, by crosslinking a copolymerized rubber of ethylene and propylene is disclosed in US-A-3,644,306.

In such literature relating to copolymerization of an olefin and an alkenylsilane and crosslinking of the copolymer, there is no teaching that such a copolymer could be useful for resins excellent in impact resistance and rigidity as in this invention.

The present inventors have been intensively studying in pursuit of a block copolymer which solves the above-described problem, and thus have accomplished this invention.

Accordingly, this invention provides a block copolymer of propylene which is obtained by polymerizing propylene or a mixture of α-olefins comprising at least 94% by weight of propylene in the presence of a catalyst comprising a transition metal catalyst and an organometal compound, the amount polymerized being 50-95% by weight of the total polymer and thereafter copolymerizing a mixture of propylene and ethylene different from the first-mentioned mixture and which copolymer is further copolymerized with an alkenylsilane of the general formula:

CH₂=CH-(CH₂)ₙSiHₘR₃₋ₘ

wherein n is 0 - 12, m is 1 - 3 and R is methyl or phenyl, or of the general formula:

CH₂=CH-(CH₂)ₙSiHₚCl₃₋ₚ

wherein n is 0 - 12 and p is 0 - 3, during at least a part of the polymerization steps, the alkenylsilane content of the block copolymer being 0.005 to 5% by weight, and the ethylene content of the block copolymer being 22% by mole or less.

This invention further provides a block copolymer of propylene obtained by treating the above-described block copolymer of propylene under conditions whereby a silanol bond is formed.

This invention further provides a process for the production of a block copolymer of propylene, which comprises (a) polymerizing propylene or a mixture of other α-olefins comprising at least 94% by weight propylene in the presence of a catalyst comprising a transition metal catalyst and an organometal compound the amount polymerized being 50-95% by weight of the total polymer, and (b) thereafter copolymerizing a different α-olefin mixture comprising propylene and ethylene, which process is characterized by conducting copolymerization with an alkenylsilane of the general formula:

CH₂=CH-(CH₂)ₙSiHₘR₃₋ₘ

wherein n is 0 - 12, m is 1 - 3 and R is methyl or phenyl, or of the general formula:

CH₂=CH-(CH₂)ₙSiHₚCl₃₋ₚ

wherein n is 0 - 12 and p is 0 - 3, during at least a part of the polymerization steps.

The invention and preferred ways of practising it will now be explained in more detail in the following description, which is given by way of non-limitative example only.

### Catalyst:

The catalyst comprising a transition metal catalyst and an organometal compound used in this invention may be any catalyst system that has a relatively high activity per catalyst and gives high stereoregularity to the obtained polypropylene, and there is no particular restriction thereon.

The transition metal catalyst is, for example, a catalyst obtained by reducing titanium tetrachloride with an organoaluminum and further treating with an electron-donating compound; a supported transition metal catalyst obtained by supporting a titanium halide by a magnesium halide, but there is no particular restriction so long as it is highly active and gives a highly stereoregular polypropylene.

A great variety of supported transition metal catalysts are known.

Examples therefor include those produced by the following processes:
(1) a process which comprises treating a titanium halide by contacting with a support obtained by grinding in mixture a magnesium compound, preferably a magnesium halide, and an electron-donating compound selected from oxygen-containing organic compounds such as carboxylic acid esters etc., using a grinding aid if needed.
(2) a process which comprises dissolving a magnesium compound, preferably a magnesium halide or an alkoxymagnesium, in a hydrocarbon solvent using an alcohol etc. in the presence or absence of the above-described electron-donating compound, and contacting this solution with a titanium halide to precipitate a complex of magnesium and titanium, which may be further treated by contacting with the above-described electron-donating compound and/or a titanium halide as needed.
(3) a process which comprises treating a magnesium-containing support obtained by decomposing an alkylmagnesium etc. in the presence or absence of the above-described electron-donating compound, with a titanium halide in the presence or absence of the above-described ester (for example, Japanese Patent Application Laid-open No. 138710/1983), and so on .

Examples of the organometal compound used in combination with such a transition metal catalyst include organoaluminum compounds, organomagnesium compounds, organozinc compounds, organolithium compounds etc., and especially, organoaluminum compounds and organomagnesium compounds are preferred.

Specifically, preferred organoaluminum compounds are trialkylaluminums and dialkylaluminum halides, and preferred organomagnesium compounds are dialkylmagnesiums and diarylmagnesiums.

Further, on polymerization, an electron-donating compound may be used in combination as a stereoregularity improver, and there have heretofore been known many compounds as such a compound. For example, there are esters, ethers, ortho-esters, alkoxysilicons etc. as the oxygen-containing organic compound, and there are amines, amides etc. as the nitrogen-containing compound. Especially preferred of these are esters of aromatic carboxylic acids, ortho-alkyl esters, ortho-aryl esters and silicon compounds containing 1 - 4 alkoxy groups and 0 - 3 alkyl groups, and in these compounds, the alkyl group or the aryl group preferably contains 1 - 20 carbon atoms.

In this invention, the proportion of the above-described respective compounds used may be selected from a range of considerable width, and it is general to use about 0.1 - 10,000 moles of the organometal compound and about 0.01 - 1,000 moles of the electron-donating compound per mole of titanium in the transition metal catalyst.

Further, in this invention, the above-described organometal compound and/or the electron-donating compound may be added in the whole quantity at the start, or may also be added supplementarily in the middle of the polymerization in order to control the polymerization rate etc.

### Polymerization Process:

The polymerization process used in the process of this invention may be conducted by any of the known processes for polymerizing olefins, and in general, examples include a slurry polymerization process which comprises polymerization in the presence of an inert solvent, a bulk polymerization process which comprises utilizing propylene itself as a liquid medium, and a gas-phase polymerization process in which a liquid medium is substantially absent.

The polymerization conditions are not particularly restricted as far as the catalyst is effectively utilized, and in general, the polymerization temperature is 25 to 150°C, preferably 40 - 100°C. The polymerization pressure is e.g. from normal atmospheric pressure to 50 kg/cm.

This polymerization process and the polymerization conditions are common between the first stage and the subsequent copolymerization stage, but it is also possible to conduct the polymerization by changing the polymerization process and the polymerization conditions in the middle of the polymerization.

In this invention, propylene or a mixture of α-olefins comprising at least 94% by weight propylene are polymerized in the first stage in the presence of the aforesaid catalyst and thereafter, α-olefins comprising propylene and ethylene as essential are copolymerized to obtain a block copolymer, and this block copolymer is characterized by being further copolymerized with an alkenylsilane during at least a part of the polymerization steps.

In this invention, the homopolymerization of propylene or the copolymerization of a mixture of α-olefins comprising at least 94% by weight propylene is conducted in the first stage in the presence or absence of an alkenylsilane.

As the α-olefins used in the first stage, there may be used not only propylene alone but also small amounts, e.g. up to about 6%, of other olefins such as ethylene, butene-1 etc.

The molecular weight of the polypropylene or the propylene α-olefin copolymer in the first stage is about 0.5 - 3dl/g expressed as the intrinsic viscosity measured in tetralin solution at 135°C (hereinafter referred to as [η]), and the amount polymerized is 50 - 95% by weight based on the total polymer.

In this invention, the copolymerization of α-olefins comprising propylene and ethylene as essential is subsequently conducted in the presence or absence of an alkenylsilane.

There are no particular restrictions regarding, e.g., the reaction ratio of ethylene to propylene or the molecular weight in the copolymerization reaction, the employment of multi-staged copolymerization with varied copolymerization ratios and molecular weights, etc., and known processes generally employed for block copolymers of propylene and ethylene may be applied. In general, the copolymerization ratio of propylene to ethylene is preferably about 10/90 - 95/5 by weight, the molecular weight is about 0.5 - 20 dl/g expressed as [η], and the amount polymerized based on the total polymer is preferably 50 - 5% by weight.

As a modification of the above-described polymerization processes, the production of the copolymer may also be conducted as follows:

That is, a first process is a process for the production of a copolymer which comprises conducting copolymerization of propylene and alkenylsilane for 50 - 95% by weight of the total polymer and further conducting copolymerization of ethylene, propylene and an alkenylsilane for 50 - 5% by weight.

Another process is a process for the production of a copolymer which comprises conducting substantially homopolymerization of propylene for 50 - 95% by weight of the total polymer, then conducting polymerization of propylene and an alkenylsilane for 20 - 0% by weight and further conducting copolymerization of ethylene, propylene and an alkenylsilane for 50 - 5% by weight.

The block copolymer of propylene of this invention obtained by the above-described stepwise polymerization process may be understood as a polymer composition comprising the polymer and copolymers formed in the respective polymerization steps.

In the process of this invention, during at least a part of the first polymerization and/or subsequent copolymerization steps, an alkenylsilane of the general formula:

CH₂=CH-(CH₂)ₙSiHₘR₃₋ₘ

wherein n is 0 - 12, m is 1 - 3, and R is methyl or phenyl or of the general formula:

CH₂=CH-(CH₂)ₙSiHₚCl₃₋ₚ

wherein n is 0 - 12 and p is 0 - 3 is used, and specific examples therefor include vinylsilane, allylsilane, butenylsilane, pentenylsilane, or compounds of those in which 1 - 2 hydrogen atoms of the Si-H bonds of these monomers are substituted by methyl groups or phenyl groups or those in which 1 - 3 Si-H bonds are substituted by chlorine.

The step for adding the alkenylsilane to copolymerize with the α-olefins may be at any state, and may be freely selected among a mode in which the addition is conducted at the start or in the middle of the first stage, or a mode in which the addition is conducted during the copolymerization step involving propylene and ethylene as essential components subsequent to the first stage.

Where the addition is conducted at the start of or in the middle of the first stage, a copolymer of propylene and the alkenylsilane is mainly produced. If the unreacted alkenylsilane is transferred to the subsequent copolymerization step, a part thereof also gives a copolymer of the α-olefins and the alkenylsilane in this next stage.

If the alkenylsilane is added in the stage subsequent to the first stage, a copolymer of ethylene, propylene etc. with the alkenylsilane is produced.

The proportion of the alkenylsilane polymerized in the alkenylsilane copolymerized part is preferably about 0.01 - 10% by weight of the polymer in said part, while the alkenylsilane content in the total polymer is 0.005 - 5%, preferably 0.01 - 3%. With less than 0.005%, the improvement in the physical properties is not marked, whereas if it exceeds 5%, the flowability of the copolymer becomes poor and thus it is not preferred.

In addition, within the range of the above-described content of the alkenylsilane, the block copolymer of this invention may be used in admixture with an ordinary polyolefin containing no alkenylsilane.

The above-described copolymer obtained by the process of this invention may be used as a useful resin excellent in rigidity and impact resistance.

In this invention, the rigidity and impact resistance may further be improved by treating the above-described copolymer under conditions where Si-H and/or Si-Cl can form a silanol bond, Si-O-Si. The method for treating under conditions where a silanol bond is formed is known by, for example, US-A-3,644,306 and a known method may be applied.

The most convenient and simple method therefor is a method which comprises heat treating the above-described copolymer with water and/or oxygen. The heating temperature herein applied is generally in the range of from 50°C to just below the decomposition temperature of the polymer.

On this occasion, a known catalyst effective for forming a silanol bond may also be present. Examples therefor include compounds selected from organic acids and salts thereof, organic bases, and alkoxylates, hydroxides and oxides of alkali metals and alkaline earth metals, that is, various compounds known as siloxane condensation catalysts, especially, alkoxides of alkali metals and tin, lead and the like salts of carboxylic acids etc. may be exemplified.

The above-described catalysts are generally added in an amount of 0.001 - 1% by weight, preferably 0.05 - 0.5% by weight, based on the total polymer.

The following examples are given to describe this invention more particularly but non-limitatively.

### Example 1

### i) Synthesis of Transition Metal Catalyst A

A vibration mill equipped with 4 grinding pots, each having a capacity of 4 ℓ and containing 9 kg of steel balls of 12 mm diameter, was prepared. In a nitrogen atmosphere, each pot was charged with 300 g of magnesium chloride, 60 ml of diisobutyl phthalate and 30 ml of 1,2-dichloroethane, and grinding was effected for 40 hours.

300 g of the above-described ground product was added to a 5 ℓ flask, 1.5 ℓ of titanium tetrachloride and 1.5 ℓ of toluene were added thereto and stirred at 100°C for 30 minutes, then allowed to stand, the supernatant was decanted off twice, and the solid constituent was washed with 4 ℓ portions of n-heptane and repeated 10 times to obtain a transition metal catalyst slurry.

The obtained transition metal catalyst A contained 2.6% by weight of titanium and 4.6% by weight of diisobutyl phphalate.

### ii) Synthesis of Transition Metal Catalyst B

700 ml of refined kerosine, 10 g of magnesium chloride and 37 g of 2-ethylhexanol were added to a round bottom flask having a capacity of 2 ℓ, and stirred at 100°C for 24 hours to completely dissolve. 10 ml of diisobutyl phthalate was added thereto, then stirred, and thereafter the whole was gradually added dropwise to 2 ℓ of titanium tetrachloride kept at 0°C in a round bottom flask of 5 ℓ. Then, the temperature was gradually raised, and treatment was effected at 100°C for an hour. Thereafter, the solid constituent alone was transferred to a 200 ml round bottom flask, then 100 ml of titanium tetrachloride was added, stirred at 100°C, and finally the solid constituent was washed with n-heptane and repeated 10 times to obtain a transition metal catalyst slurry.

This transition metal catalyst B contained 3.5% by weight of titanium and 5.2% by weight of diisobutyl phthalate.

### iii) Polymerization Reaction

In a nitrogen atmosphere, 20 mg of the transition metal catalyst A, 0.06 ml of triethylaluminum and 0.03 ml of trimethoxyphenylsilane were added to an autoclave having a capacity of 5 ℓ, followed by 1.8 kg of propylene and 3.3 Nl of hydrogen successively, and a polymerization was effected at 75°C for 2 hours.

After the polymerization, the unreacted propylene was purged, and a part of the polymer was taken out and dried. Further, ethylene and propylene together with vinylsilane were added to the remaining polypropylene, and polymerization was effected at 50°C for 30 minutes. On that occasion, the partial pressures of propylene and ethylene were 15 kg/cm and 7 kg/cm respectively, while the amount of the vinylsilane added was 20 g and that of hydrogen was 0.2 Nl. After the polymerization, the unreacted gas was purged, the contents were taken out and dried to obtain 620 g of a copolymer.

The intrinsic viscosity [n] of the powder measured in tetralin solution at 135°C was 1.38 dl/g for the initial propylene homopolymerized part and 2.05 dl/g for the whole block copolymer, and the ethylene content was 8.5% by weight and the vinylsilane content was 0.02% by weight.

Further, the melt flow index (hereinafter referred to as MI) was measured after adding a known stabilizer and 0.01% by weight of the powder of butyltin laurate and pelletizing.

An injection sheet of 1 mm in thickness was prepared and the physical properties were measured (Example 1-1).

Thereafter, it was treated with boiling water for 2 hours, and the following physical properties values were measured (Example 1-2).

[The temperature on measurement is given in brackets].

The results are shown in Table.
MI ASTM D1238 [230°C]
Flexural stiffness ASTM D747-63 [20°C]
Izod (notched) impact strength kg cm/cm
ASTM D256-56 [20°C, -10°C]
DuPont impact strength kg cm/1/2"φ
JIS K6718 [20°C, -10°C]

### Comparative Example 1

Example 1 was repeated except that the copolymerization of ethylene and propylene was conducted without using vinylsilane, to obtain a block copolymer having an ethylene content of 8.6% by weight.

The results of the physical properties measurement conducted on the obtained copolymer (Comparative Example 1-1) and the results of the physical properties measurement after treatment with boiling water (Comparative Example 1-2) are shown in Table 1.

### Example 2

Example 1 was repeated except that the transition metal catalyst A was replaced by the transition metal catalyst B, that the reaction temperature for the copolymerization was set at 40°C, that the ethylene partial pressure was 10 kg/cm, and that the vinylsilane was replaced by allylsilane, to obtain a copolymer having an ethylene content of 10.2% by weight and an allylsilane content of 0.02% by weight. The results of the physical properties measurement are shown in Table 1. However, only the physical properties after treatment with boiling water were measured.

### Comparative Example 2

Example 2 was repeated except that the allylsilane was not used, to obtain a copolymer.

The results are shown in Table 1. However, only the physical properties after treatment with boiling water were measured.

### Example 3

50 mg of a commercially available highly active titanium trichloride catalyst (highly active titanium trichloride catalyst, produced by Marubeni Solvey Co., Ltd., trade name: TGY-24) and 1 ml of diethylaluminum chloride were added to an autoclave having a capacity of 5 ℓ, further 1.5 kg of propylene was added, then 4.4 Nl of hydrogen was charged, and, after heating to make the internal temperature 70°C, polymerization was effected for 2 hours. Thereafter, the unreacted propylene was purged, then 10 kg/cm-G as a partial pressure of ethylene and 15 kg/cm-G as a partial pressure of propylene were charged, 20 g of vinylsilane was added followed by 0.3 Nl of hydrogen, and polymerization was effected at 50°C for an hour during which the partial pressures of ethylene and propylene were maintained.

After the polymerization, the unreacted monomers were purged, to obtain 570 g of a powder. The [η] of the powder was 2.65 dl/g, and the ethylene content was 15.3% by weight and the vinylsilane content was 0.01% by weight.

Using this block copolymer, the physical properties were measured in a manner similar to that in Example 1-2, and the results are shown in Table 1. Only the physical properties after treatment with boiling water were measured.

### Example 4

Example 3 was repeated except that the vinylsilane in the copolymerization was replaced by 50 ml of vinylmonochlorosilane.

The obtained copolymer had a [η] of 2.70 dl/g, an ethylene content of 15.2% by weight and a vinylmonochlorosilane content of 0.1% by weight.

Using this block copolymer, the physical properties were measured in a manner similar to that in Example 1-2, and the results are shown in Table 1. Only the physical properties after treatment with boiling water were measured.

### Example 5

In a nitrogen atmosphere, 20 mg of the transition metal catalyst A obtained in Example 1, 0.06 ml of triethylaluminum and 0.03 ml of trimethoxyphenylsilane were added to an autoclave having a capacity of 5 ℓ, followed by 1.8 kg of propylene and 3.3 Nl of hydrogen successively, and a polymerization reaction was effected at 75°C for 2 hours. Thereafter, 20 g of vinylsilane was charged thereto under pressure, and the polymerization was further continued for 10 minutes. After this reaction, the unreacted propylene was purged, and a part of the polymer was taken out and dried. Further, the polymerization was effected in the presence of the remaining polypropylene at 60°C for 40 minutes after adding ethylene, propylene and vinylsilane. On this occasion, the partial pressures of propylene and ethylene were 15 kg/cm-G and 7 kg/cm-G respectively, and the vinylsilane and hydrogen were added in amounts of 10 g and 0.2 Nl respectively. After the polymerization, the unreacted gas was purged, and the contents were taken out and dried to obtain 670 g of a copolymer.

The powder had a [η] of 2.14 dl/g and an ethylene content of 8.8% by weight. Further, homopolymerization of propylene was separately conducted, and the proportion of the polymerization and the reaction ratio were calculated for each polymerization, to find that the polymerization of propylene alone was about 80% by weight, that the copolymerization of propylene and vinylsilane was about 5% by weight with a vinylsilane content of 0.07% by weight, and that the polymerization of propylene, ethylene and vinylsilane was about 15% by weight with a vinylsilane content of 0.15% by weight and an ethylene content of 55% by weight.

Further, the MI was measured after adding a known stabilizer and 0.01% by weight of the powder of butyltin laurate and pelletizing.

Furthermore, an injection sheet of 1 mm in thickness was prepared, and the physical properties were measured in a manner similar to that in Example 1 (Example 5-1). Thereafter, it was treated with boiling water for 2 hours, and the physical properties were measured similarly (Example 5-2). The results are shown in Table 1.

### Comparative Example 3

Example 5 was repeated except that the copolymerization of propylene and ethylene were conducted without using any vinylsilane. The results are shown in Table 1. Only the physical properties after treatment with boiling water were measured.

### Example 6

Example 1 was repeated except that the transition metal catalyst A was replaced by the transition metal catalyst B, that the reaction temperature for the copolymerization was set at 40°C, that the ethylene partial pressure was 10 kg/cm-G, and that the vinylsilane was replaced by allylsilane. As a result, the ethylene content was 9.1% by weight and the vinylsilane content was 0.03% by weight. The results are shown in Table 1. Only the physical properties after treatment with boiling water were measured.

### Comparative Example 4

Example 6 was repeated except that the allylsilane was not used to obtain a copolymer of propylene and ethylene.

The results of the physical properties measurement are shown in Table 1. Only the physical properties after treatment with boiling water were measured.

### Example 7

50 mg of a commercially available highly active titanium trichloride catalyst (highly active titanium tirchloride catalyst produced by Marubeni Solvey Co., Ltd., trade name: TGY-24) and 1 ml of diethylaluminum chloride were added to an autoclave having a capacity of 5 ℓ, further 1.5 kg of propylene was added, then 5.4 Nl of hydrogen was added and, after heating to make the internal temperature 70°C, polymerization was effected for 2 hours. Then, 10 g of vinylsilane was charged under pressure and the polymerization was continued for 20 minutes. Thereafter, the unreacted propylene was purged, 10 kg/cm-G as a partial pressure of ethylene, 15 kg/cm-G as a partial pressure of propylene and 20 g of vinylsilane were added followed by 0.3 Nl of hydrogen, and polymerization was effected at 55°C for an hour during which the partial pressures of propylene and ethylene were maintained. After the polymerization, the unreacted monomers were purged to obtain 565 g of a powder.

The powder had a [η] of 2.25 dl/g, an ethylene content of 10.4% by weight and a vinylsilane content of 0.02% by weight.

The results are shown in Table 1. Only the physical properties after treatment with boiling water were measured.

### Example 8

Example 7 was repeated except that 50 ml of vinylmonochlorosilane was added on copolymerization. The obtained copolymer had a [η] of 2.15 dl/g, an ethylene content of 10.8% by weight and a vinylmonochlorosilane content of 0.1% by weight. The results are shown in Table 1. Only the physical properties after treatment with boiling water were measured.

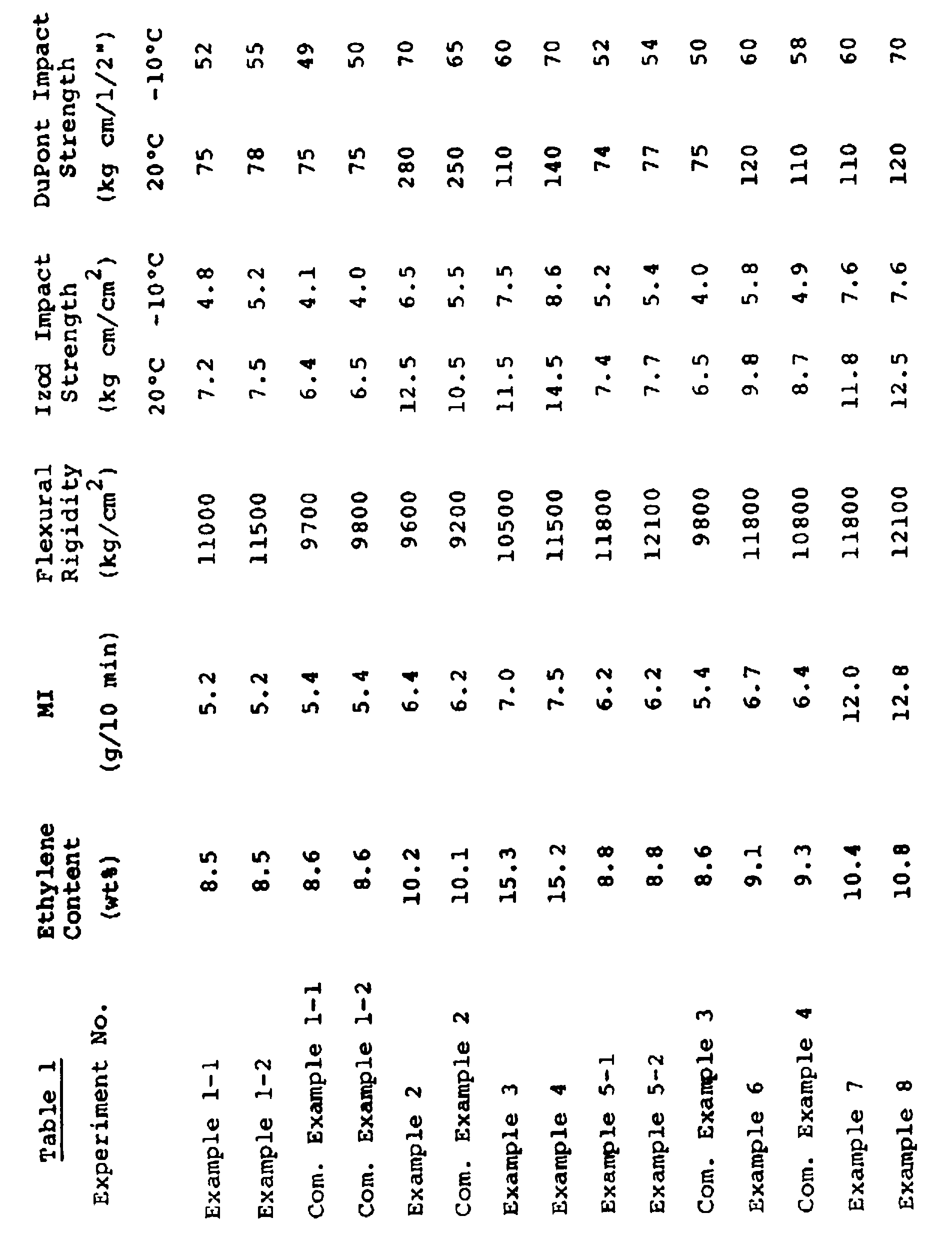

## Claims

1. A block copolymer of propylene which is obtained by polymerizing propylene or a mixture of α-olefins comprising at least 94% by weight of propylene in the presence of a catalyst comprising a transition metal catalyst and an organometal compound, the amount polymerized being 50-95% by weight of the total polymer and thereafter copolymerizing a mixture of propylene and ethylene different from the first-mentioned mixture and which copolymer is further copolymerized with an alkenylsilane of the general formula:
CH₂=CH-(CH₂)ₙSiHₘR₃₋ₘ
wherein n is 0 - 12, m is 1 - 3 and R is methyl or phenyl, or of the general formula:
CH₂=CH-(CH₂)ₙSiHₚCl₃₋ₚ
wherein n is 0 - 12 and p is 0 - 3, during at least a part of the polymerization steps, the alkenylsilane content of the block copolymer being 0.005 to 5% by weight, and the ethylene content of the block copolymer being 22% by mole or less.

2. A process for preparing a block copolymer of propylene having excellent rigidity and impact resistance and containing from 0.005% to 5% by weight of an alkenylsilane and 22% by mole or less of ethylene, comprising
(a) polymerizing a first compound selected from propylene and a mixture of other α-olefins and comprising at least 94% by weight of propylene in the presence of a catalyst comprising a transition metal catalyst and an organometal compound the amount polymerized being 50-95% by weight of the total polymer; and
(b) copolymerizing a different α-olefin mixture comprising propylene and ethylene to form a copolymer,
wherein in at least one of steps (a) and (b), copolymerization is carried out with an alkenylsilane selected from the compounds of the formulas (I) and (II):
CH₂=CH-(CH₂)ₙSiHₘR₃₋ₘ (I)
CH₂=CH-(CH₂)ₙSiHₚCl₃₋ₚ (II)
wherein n is from 0 to 12, m is from 1 to 3, p is from 0 to 3 and R is methyl or phenyl.

3. The process according to Claim 2, wherein the molecular weight of the first stage polymer of propylene or the α-olefins predominantly comprising propylene is 0.5 - 3 dl/g expressed as the intrinsic viscosity [η] measured at 135°C in tetralin solution, and the molecular weight of the subsequent polymer of the α-olefins comprising propylene and ethylene as essential is 0.5 - 20 dl/g as measured similarly.

4. The process according to Claim 2 or Claim 3, wherein the polymerization temperature is 40 - 100°C, the polymerization pressure is atmospheric pressure to 50 kg/cm, and the amount of the catalyst is in the range of 0.001 - 1% by weight based on the total polymer amount.

5. The process according to Claim 2, 3 or 4, wherein the copolymer is subjected to heat treatment in the presence of water and/or oxygen to form a silanol bond.

## Patentansprüche

1. Blockcopolymer des Propylens, welches erhalten worden ist durch Polymerisation von Propylen oder einer Mischung aus α-Olefinen, die wenigstens 94 Gew.-% Propylen enthalten, in Anwesenheit eines Katalysators, umfassend einen Übergangsmetallkatalysator und eine metallorganische Verbindung, wobei die polymerisierte Menge 50-95 Gew.-% des gesamten Polymeren beträgt, und anschließende Copolymerisation einer Mischung aus Propylen und Äthylen,die verschieden ist von der erstgenannten Mischung, und welches Copolymer mit einem Alkenylsilan der allgemeinen Formel:
CH₂=CH-(CH₂)ₙSiHₘR₃₋ₘ
worin n 0 bis 12, m 1 bis 3 und R Methyl oder Phenyl ist, oder der allgemeinen Formel:`
CH₂=CH-(CH₂)ₙSiHₚCl₃₋ₚ
worin n 0 bis 12 und p 0 bis 3 ist, während wenigstens eines Teils der Polymerisationsstufen copolymerisiert wird, wobei der Alkenylsilangehalt des Blockcopolymeren 0,005 bis 5 Gew.-% und der Äthylengehalt des Blockcopolymeren 22 Mol-% oder weniger beträgt.

2. Verfahren zur Herstellung eines Blockcopolymeren aus Propylen mit einer ausgezeichneten Steifigkeit und Schlagbeständigkeit, enthaltend von 0,005 bis 5 Gew.-% eines Alkenylsilans und 22 Mol-% oder weniger Äthylen, umfassend:
(a) die Polymerisation einer ersten Verbindung, ausgewählt aus Propylen und einer Mischung aus anderen α-Olefinen und enthaltend wenigstens 94 Gew.-% Propylen in Anwesenheit eines Katalysators, enthaltend einen Übergangsmetallkatalysator und eine metallorganische Verbindung, wobei die polymerisierte Menge 50-95 Gew.-% des gesamten Polymeren ausmacht, und
(b) Copolymerisation einer unterschiedlichen α-Olefin-Mischung, enthaltend Propylen und Äthylen zur Bildung eines Copolymeren,
worin in wenigstens einer der Stufen (a) und (b) die Copolymerisation mit einem Alkenylsilan durchgeführt wird, ausgewählt aus den Verbindungen der Formeln (I) und (II):
CH₂=CH-(CH₂)ₙSiHₘR₃₋ₘ (I)
CH₂=CH-(CH₂)ₙSiHₚCl₃₋ₚ (II)
worin n 0 bis 12 ist, m bis 3 ist, p 0 bis 3 ist und R Methyl oder Phenyl darstellt.

3. Verfahren nach Anspruch 2, worin das Molekulargewicht der ersten Polymerstufe des Propylens oder des α-Olefins welches vorherrschend Propylen enthält, 0,5 bis 3 dl/g, ausgedrückt als grundmolare Viskosität (η ), gemessen bei 135°C in Tetralinlösung ist und das Molekulargewicht des nachfolgenden Polymeren der α-Olefine, die Propylen und Äthylen enthalten, im wesentlichen 0,5 bis 20 dl/g ist, gemessen in entsprechender Weise.

4. Verfahren nach Anspruch 2 oder Anspruch 3, worin die Polymerisationstemperatur 40 bis 100°C beträgt, der Polymerisationsdruck Atmosphärendruck bis 50 kg/cm beträgt und die Menge des Katalysators im Bereich von 0,001 bis 1 Gew.-%, bezogen auf den gesamten Polymergehalt, beträgt.

5. Verfahren nach Anspruch 2,3 oder 4, worin das Copolymer der Wärmebehandlung in Anwesenheit von Wasser und/oder Sauerstoff unterworfen wird, um eine Silanolbindung zu bilden.

## Revendications

1. copolymère séquencé de propylène qui est obtenu par polymérisation du propylène ou d'un mélange d'α-oléfines, comprenant au moins 94 % en poids de propylène, en présence d'un catalyseur comprenant un catalyseur à métal de transition et un composé organométallique, la proportion polymérisée étant de 50 à 95 % en poids du polymère total, puis la copolymérisation d'un mélange de propylène et d'éthylène différent du mélange précité et lequel copolymère est de plus copolymérisé avec un alcénylsilane de formule générale :
CH₂=CH-(CH₂)ₙSiHₘR_{3 - m}
dans laquelle n est 0 à 12, m est 1 à 3 et R est un méthyle ou un phényle, ou de formule générale :
CH₂=CH-(CH₂)ₙSiHₚCl_{3 - p}
dans laquelle n est 0 à 12 et p est 0 à 3, pendant au moins une partie des étapes de polymérisation, la teneur en alcénylsilane du copolymère séquencé étant de 0,005 à 5 % en poids et la teneur en éthylène du copolymére séquence étant de 22% molaires ou moins.

2. Procédé pour préparer un copolymère séquence de propylène ayant une rigidité et une résistance au choc excellentes et contenant 0,005 % à 5 % en poids d'un alcénylsilane et 22 % molaires ou moins d'éthylène, comprenant
(a) la polymérisation d'un premier composé choisi parmi le propylène et un mélange d'autres α-oléfines et comprenant au moins 94 % en poids de propylène, en présence d'un catalyseur comprenant un catalyseur à métal de transition et un composé organométallique, la proportion polymérisée étant de 50 à 95 % du poids du polymère total ; et
(b) la copolymérisation d'un mélange différent d'α-oléfines comprenant du propylène et de l'éthylène pour former un copolymère,
où, dans au moins une des étapes (a) et (b), une copolymérisation est effectuée avec un alcénylsilane choisi parmi les composés de formules (I) et (II) :
CH₂=CH-(CH₂)ₙSiHₘR_{3 - m} (I)
CH₂=CH-(CH₂)ₙSiHₚCl_{3 - p} (II)
où n est 0 à 12, m est 1 à 3, p est 0 à 3 et R est un méthyle ou un phényle.

3. Procédé selon la revendication 2, où le poids moléculaire du polymère primaire de propylène ou des α-oléfines comprenant principalement de propylène est de 0,5 à 3 dl/g exprimé par la viscosité intrinsèque [η] mesurée à 135°C en solution dans la tétraline et le poids moléculaire du polymère suivant des α-oléfines comprenant essentiellement du propylène et de l'éthylène est essentiellement de 0,5 à 20 dl/g mesuré de façon semblable.

4. Procédé selon la revendication 2 ou la revendication 3, où la température de polymérisation est de 40 à 100°C, la pression de polymérisation est comprise entre la pression atmosphérique et 50 kg/cm et la proportion du catalyseur est dans la gamme de 0,001 à 1 % en poids relativement à la quantité totale de polymère.

5. Procédé selon la revendication 2, 3 ou 4, où le copolymère est soumis à un traitement thermique en présence d'eau et/ou d'oxygène pour former une liaison silanol.
